# EUROPEAN PATENT APPLICATION

(11) **EP 1 947 859 A1**
(43) Date of publication of application: **23.07.2008**
(21) Application number: 06255313.6
(22) Date of filing: 16.10.2006
(51) Int. Cl.: H04N 7/24

(54) **Video transmission method and system**

(71) Applicant: British Telecommunications Public Limited Company, London EC1A 7AJ (GB)
(72) Inventor: The designation of the inventor has not yet been filed
(74) Representative: Sayer, Robert David

(57) **Abstract**

A method of transmitting data to a receiving device over a network is described, the data representing a sequence of video frames F₁.....Fₙ. The method comprises a first step of providing first and second data sources, the second source encoding the frame sequence F₁.....Fₙ using fewer bits than the first source. Next, data is transmitted from the first source to the receiving device. During transmission, if control information is received indicating that data representing part of an intermediate video frame Fᵢ was not received at the receiving device, transmission of data from the first source ceases and data representing the complete intermediate video frame Fᵢ and one or more subsequent frames in the sequence is transmitted from the second source.

## Description

### Field of the Invention

The present invention relates to a video transmission method and system.

### Background of the Invention

It is known to transmit data representing video programmes over a data network, for example a packet-switched data network such as the Internet. Recently, service providers have begun transmitting television programmes to large numbers of customers over the Internet as opposed to the traditional wireless broadcast system. This system is often referred to as Internet Protocol TV, or IPTV, on the basis that data representing video frames is transmitted using the well-known IP network layer protocol. In order to receive video data, users are provided with a set top box (STB) connected both to the network and the television, the STB being responsible for receiving, decoding and displaying the incoming video data to the television. In addition to television programmes, service providers may also provide a range of so-called value added services, such as video on demand (VOD) content and interactive capabilities.

As will be understood, there is no guarantee that data sent over a network, particularly an IP network, will reach its intended destination. This is because the network will often be comprised of interconnected servers and routers each of which is susceptible to congestion, corruption and other problems that can prevent data reaching its destination or with a delay that renders the data useless.

To provide a reliable end-to-end connection between devices, many commercial IPTV systems use the Transmission Control Protocol (TCP) over the IP network layer. TCP is advantageous in that it provides a congestion control mechanism that reduces the transmission rate as a function of congestion in the network. In addition, TCP achieves reliability by obliging the receiver to acknowledge received data. If a packet of data remains unacknowledged after a predetermined timeout period, TCP assumes the packet was not received and the same packet is retransmitted. Unfortunately, where the data represents frames of video, this can cause jitter at the receiver since, firstly, a timeout period has to expire before the transmitter knows the packet has not been received and, secondly, an extra round trip is incurred for the lost packet. Jitter can normally be controlled by using a reasonably large receiver buffer and/or using latency management techniques to ameliorate the otherwise long buffer fill times.

The feedback information which TCP/IP utilises to detect network congestion has been exploited in some video streaming systems to adapt the video quality at the transmitter to suit network throughput. It is considered far better, in terms of user experience, to reduce the video quality in a controlled way in response to network congestion than suffer lost or late data arrival. However, there is a weakness with this approach. As mentioned above, once TCP is given data to transmit, it will ensure that the data is received, subject to timeout, even if the data has to be retransmitted a number of times. For video streaming, this is not ideal behaviour. For example, consider the situation where a video stream is being transmitted at high quality and at a first data rate. If congestion occurs on the network such that network throughput is reduced, it is likely that routers will begin dropping packets or be unable to get them through the network in the required timeframe. The transmitter might reduce the quality of the video in some way to suit transmission to the new network throughput. However, any packets already passed to TCP prior to congestion occurring will be resent, possibly over and over due to the congestion. In this situation, the receiver may be displaying video frames at a significantly faster rate than new frames can be received at the receiver buffer. If the buffer empties entirely, either an error message will be displayed or a blank screen will be presented, both scenarios being highly undesirable for both service provider and customer.

### Summary of the Invention

According to a first aspect of the invention, there is provided a method of transmitting data to a receiving device over a network, the data representing a sequence of video frames F₁.....Fₙ, the method comprising: (a) providing first and second data sources each encoding the frame sequence, the second source encoding the frame sequence using fewer bits than the first source; (b) transmitting data from the first source to the receiving device; (c) during step (b) receiving control information indicating that data representing part of an intermediate video frame Fᵢ was not received at the receiving device; and (d) in response to (c), ceasing transmission of data from the first source and transmitting data representing the complete intermediate video frame Fᵢ and one or more subsequent frames in the sequence from the second source.

The method provides an improved and reliable way of transmitting data representing video frames over a network where congestion is an issue, for example a packet-switched data network such as the Internet. In the event that data representing part of a frame, e.g. a packet, is not received, then transmission from the current data source ceases and data representing the entire frame, as opposed to just the lost data, is retransmitted from a different data source, the different data source encoding the frames in such a way as to improve throughput of frames in the event of network congestion. There is therefore reliable delivery of pictures rather than the attempted reliable delivery of data which is employed in prior art TCP/IP systems.

The second source may encode each frame in the frame sequence F₁.....Fₙ using a fewer number of bits than the first source, for example by encoding each frame at a lower resolution than the first source. Alternatively, or additionally, the second source can encode fewer frames of the frame sequence F₁.....Fₙ than the first source. For example, the first source might encode the frame sequence using reference and non-reference frames and the second source might be arranged to drop one or more non-reference frames prior to transmission. Whether reducing the number of bits per frame or dropping non-reference frames from the sequence, it will be understood that encoding the sequence using fewer bits will enable the efficient transfer of frames through a congested network at a lower average bit-rate.

The control information may be generated by means of monitoring data acknowledgment signals sent from the receiving device and identifying an intermediate frame Fᵢ for which at least one acknowledgment signal is not received in respect of its constituent data within a predetermined time period. In the preferred embodiment, data is transmitted, and acknowledgment signals received, using the Datagram Congestion Control Protocol (DCCP). DCCP is a relatively new message oriented transport layer protocol that, like TCP, provides congestion control but, unlike TCP, does not retransmit unacknowledged data. DCCP was published as a proposed standard by the Internet Engineering Task Force (IETF) in March 2006 under RFC 4340, a copy of which can currently be obtained from http://tools.ietf.org/html/rfc4340.

The control information is preferably generated using an application program arranged to identify said intermediate frame Fᵢ from the at least one acknowledgment signal not received within the predetermined time period. The application program may be provided at the receiving device.

The control information itself can be transmitted using the Real Time Protocol (RTP) or Real Time Control Protocol (RTCP).

The method is applicable to data encoded in any digital video format, for example MPEG or H.264.

According to a second aspect of the invention, there is provided a method of transmitting data representing a sequence of video frames F₁.....Fₙ to a receiving device over a network, the method comprising: (a) encoding the sequence of video frames into first and second data streams, the second data stream representing each frame, or a subset of frames, of the sequence with fewer bits than the first data stream; (b) transmitting the first data stream to the receiving device at a first average data rate; (c) during transmission of the first data stream, receiving control information from which can be identified an intermediate frame Fᵢ for which constituent data was not completely received at the receiving device; and (d) in response to (c), ceasing transmission the first data stream and re-transmitting the complete intermediate video frame Fᵢ and subsequent frames using the second data stream, the second data stream being transmitted at a second average data rate which is lower than the first.

According to a third aspect of the invention, there is provided a method of generating control information for use in a video transmission system arranged to transmit a data stream representing a sequence of video frames F₁.....Fₙ over a network to a receiving device, the method comprising: monitoring data acknowledgment signals generated by the receiving device in response to receiving portions of said data stream within a predetermined time period, identifying therefrom an intermediate frame Fᵢ having at least one portion of its representative data not acknowledged, and transmitting a message including the identity of said intermediate frame Fᵢ to the transmission system.

The method may further comprise transmitting the message to the transmission system using RTP or RTCP.

According to a fourth aspect of the invention, there is provided a video transmission system for transmitting data to one or more receiving devices over a network, the data representing a sequence of video frames F₁.....Fₙ, the system comprising: first and second data encoding means in which the second encoding means is arranged to encode the frame sequence using fewer bits than the first encoding means; transmitting means arranged to transmit data from either the first or second encoding means to the receiving device; and control means arranged to receive control information indicative that data representing part of an intermediate video frame Fᵢ was not received at the receiving device, wherein the transmitting means is arranged, in response to receiving said control information at the control means, to cease transmission of data from the first encoder and to commence transmission of data representing the complete intermediate video frame Fᵢ, and one or more subsequent frames in the sequence, from the second encoder.

According to a fifth aspect of the invention, there is provided a system for generating control information for use in a video transmission system arranged to transmit a data stream representing a sequence of video frames F₁.....Fₙ over a network to a receiving device, the method comprising: means arranged to monitor data acknowledgment signals generated by a receiving device in response to receiving portions of said data stream within a predetermined time period; means arranged to identify an intermediate frame Fᵢ having at least one portion of its representative data not acknowledged; and means arranged to transmit a message including the identity of said intermediate frame Fᵢ to the transmission system. The system may be comprised within a television set top box (STB).

According to a sixth aspect of the invention, there is provided a method of transmitting data representing a sequence of video frames to a receiving device over a network, the method comprising: (a) commencing transmission of the video frames as a first data stream transmitted at a first average data rate; (b) during said transmission, receiving control information from which can be identified a frame Fᵢ for which at least part of its constituent data was not received at the receiving device; and (c) in response to (b), ceasing transmission the first data stream and re-transmitting the complete video frame Fᵢ and at least one subsequent frame as a second data stream at a second average data rate which is lower than the first, the second data stream encoding the video frame Fᵢ and at least one subsequent frame using fewer bits per frame than frames already transmitted in the first data stream.

### Detailed Description of a Preferred Embodiment

The invention will now be described, by way of example, with reference to the accompanying drawings, in which:
Figure 1 is a block diagram showing the main components of an IPTV system;
Figure 2 is a block diagram showing, in further detail, components across a single channel of the IPTV system shown in Figure 1;
Figure 3a is a block diagram showing software components provided at a transmission end of the IPTV system in accordance with the invention;
Figure 3b shows, in schematic form, first, second and third frame sequences that may be encoded at the transmission end of the IPTV system;
Figure 4 shows, in schematic form, the process of retransmitting a video frame in response to detecting a lost packet of data from a differently encoded version of the same video frame;
Figure 5 is a block diagram showing an end-to-end IPTV system according to the invention; and
Figure 6 is a flow chart indicating the main steps required to transmit data from the transmitter end to the receiving end of the IPTV system shown in Figure 5.

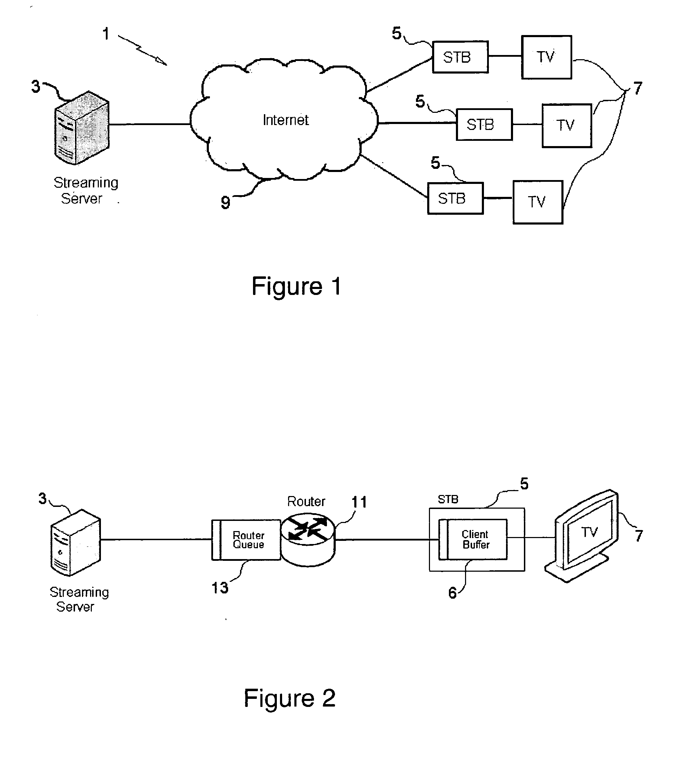

Referring to Figure 1, a typical IPTV arrangement 1 is shown comprising, at a transmitter end, a streaming server 3 and, at a receiver end, a plurality of set top boxes (STB) 5 each being connected to a respective television (TV) 7. The streaming server 3 will commonly be associated with a content service provider whose role is to gather digital video content from one or more sources, e.g. broadcast content from the BBC, and to encode the data for multicast transmission over the Internet 9 to STBs 5 residing at customer premises. The server 3 may also respond to individual service requests sent from a STB 5, such as a service request for VOD content. The STBs 5 receive the video data from the Internet 9 and thereafter decode the data which is stored in a buffer in preparation for output to the TV 7.

Referring to Figure 2, a path between the server 3 and one of the customer STBs 5 is shown in schematic form. As will be appreciated, the data packets are sent to their intended destination over the Internet 9 via interconnected routers. In the Figure, a single router 11 is shown for simplicity but in most cases a plurality of routers will have to be traversed. The router queue 13 represents the queue of packets that have yet to be forwarded by the router 11 to the next part of the routing chain. Many routers receive packets from a plurality of servers and/or other routers. It is therefore common for a router queue to approach full capacity where packets are being received at a high bit-rate from multiple sources. Under such conditions, packets can be delayed getting to their destination or even dropped. The term 'congestion' is used to indicate this condition. At the receiver end, the STB 5 includes a client buffer 6 which is responsible for receiving the packets and outputting the video frames to the TV 7. Frames are output at a constant rate, usually 25 frames/sec, whereas the rate at which frames arrive at the buffer 6 varies as a function of congestion in the network. As indicated previously, congestion can cause the client buffer 6 to empty if the rate at which frames arrive remains less than the playout rate.

The method and system described below aims to reduce the likelihood of the client buffer 6 emptying which would otherwise present to the user a blank screen or an error message. Either situation would be highly undesirable in a commercial IPTV system.

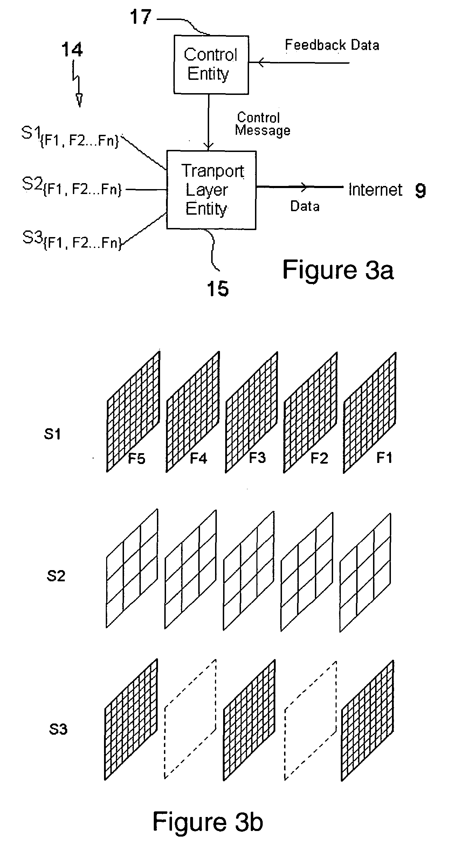

Referring to Figure 3a, which is a block diagram indicating the broad principle of operation, the streaming server 3 at the transmission end comprises a plurality of data sources 14, indicated S1, S2 and S3, each of which encodes the same sequence of video frames F1-Fn using a different number of bits. The use of two data sources is applicable to the invention but three are shown for convenience. Each data source S1, S2, S3 is accessible by a transport layer entity 15 which is responsible for establishing an end-to-end connection with a transport layer entity (not shown) at a destination STB and transferring data from a selected one of the sources using a transport layer protocol. Selection of the data source S1, S2, S3 is controlled by a control entity 17 which receives feedback data from the destination STB indicative of congestion/throughput on the end-to-end connection. Depending on the congestion/throughput situation, the control entity 17 will generate a control message for input to the transport layer entity 15, the control message determining not only which data source is selected, but also its transmission rate and whether previously-transmitted frames are to be retransmitted. This operation will be described in detail below. The control entity 17 may be located at the transmitter or receiver end or both.

Each data source S1, S2, S3 encodes the same sequence of frames F1-Fn using a different respective number of bits. S1 encodes the frames with the highest number of bits with S2 and S3 encoding the frames using fewer bits.. This encoding arrangement can be achieved in a number of ways. First, the resolution can be reduced (spatial scalability) or the number of bits-per-frame can be reduced (SNR scalability). In addition, one or more frames can be dropped from the sequence, for example by dropping non-reference frames from a sequence comprising both reference and non-reference frames. What is significant is that the average bit rate required to transfer frames F1-Fn from S2 or S3 over the network will be less than for the same sequence from S1 and so more frames can get through a congested network connection notwithstanding a reduction in average bit rate.

Figure 3b indicates, in graphic form, exemplary frames encoded at sources S1, S2 and S3. S1 might generate high definition (HD) frames encoded at 240000 bits/frame, whereas S2 might generate standard definition (SD) frames encoded at 48000 bits/frame i.e. a 5:1 compression ratio. S3 might drop non-reference frames from the HD frame sequence so that fewer frames are transmitted but at the full 240000 bits/frame resolution.

Network congestion will result in packets being dropped prior to receipt at a STB. Therefore, congestion can be detected by monitoring acknowledgment data generated by the transport layer entity 15 at the STB end of the connection. In this respect, a number of transport layer protocols already exist to provide this feedback and, advantageously, incorporate a congestion control mechanism to reduce the transmission data rate as a function of congestion. The basic principle of operation is that, when a packet of data is transmitted, the transport layer entity starts a counter for the packet which then counts down. If no acknowledgment is received for that packet by the time the counter reaches zero, the packet is considered lost and this indicates a possible congestion situation. The transmission-end transport layer entity reduces (or throttles back) its transmission data rate as a function of the congestion so as not to exacerbate the problem. Provided other devices connected to the same router take similar action, congestion should subside relatively quickly so that the data rate can be increased back to previous levels.

As well as indicating congestion, acknowledgment data, or rather the lack of acknowledgment data, is used to improve reliability. As mentioned in the introduction, reliable data transfer is achieved in conventional systems, such as those using the TCP protocol, by retransmitting individual bytes or packets for which no acknowledgment was received. Disadvantages associated with such systems were also discussed. In the present system, reliable transmission of the video data is achieved by detecting lost packets in a similar manner, but instead of retransmitting individual bytes or packets, the system ceases transmission from its current data source, identifies the frame which said lost packet or packets represent, and then retransmits that entire frame using data from a secondary source, i.e. a source encoding the same frame sequence using fewer bits. If congestion does not subside or indeed gets worse, the process can repeat from a tertiary source encoding the frame sequence using fewer bits than the secondary source. Subsequent frames are transmitted from the secondary or tertiary source until the control entity detects a reduction in congestion at which time transmission from the previous source is resumed. The aim is to achieve reliability whilst maintaining the average rate at which data arrives at the client buffer to a level which prevents the client buffer from emptying.

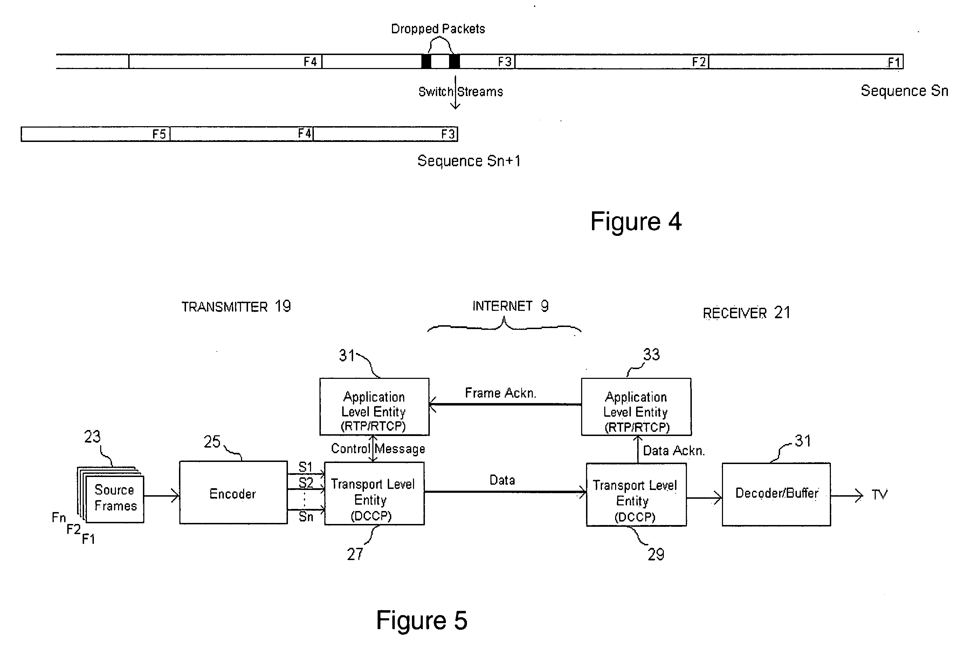

Figure 4 shows, in schematic form, the process of detecting an erroneous frame and retransmitting that frame and subsequent frames from a secondary data source.

Referring to Figure 5, a more detailed example of a complete end-to-end system is shown. At the transmitter end 19, a plurality of source frames F1-Fn are fed into an encoder module 25 which is responsible for encoding the source frames into the plurality of data sources S1-Sn. The encoder 25 may provide S1 as a HD data source (240000 bits/frame) with S2 being a SD data source (48000 bits/frame) and so on. A transport level entity 27 provides an end-to-end transport layer connection with a corresponding transport level entity 29 at the receiver STB. First and second application layer programs 31, 33 are associated with the respective transport level entities 27, 29, their combined role being to generate control messages for the transmission transport level entity 27 in response to data acknowledgment signals from the receiver transport level entity 29.

In the present embodiment, the first and second transport level entities 27, 29 communicate using the DCCP protocol. As mentioned previously, DCCP is a relatively new message oriented transport layer protocol that, like TCP, provides congestion control but, unlike TCP, does not retransmit unacknowledged data. The first and second application level entities 31, 33 communicate using the Real Time Transport Protocol (RTP) and/or Real Time Control Protocol (RTCP). Both are defined in RFC 3550.

The main steps involved in a typical streaming operation will now be described. In a first step, a first data stream is selected for transmitting the frame sequence F1-Fn which could, for example, represent a streaming television channel. For convenience, we will assume that the HD source S1 is initially selected. In the next step, the data stream representing said frames F1-Fn commences transmission at a first average data rate, e.g. 1.2 Mbits/second, on the assumption that no congestion is present on the network. The data stream is segmented into packets, each having a header and payload. The header comprises control information specifying, amongst other information, the destination address of the data (which may be a multicast address assigned to subscribers to the IPTV system) and a sequence number indicating, either directly or indirectly, the specific frame of the sequence F1-Fn to which that packet belongs and its own sequence number within that frame. The payload comprises the actual video data forming part of the frame.

At the receiver end 21, the second transport level entity 29 receives packets from the network and passes them to a decoder/buffer 31 which stores the packets in sequence so that each frame may be decoded and displayed to the TV in the correct order at 25 frames/second.

In response to receiving a packet, an acknowledgment signal is generated at the second transport level entity 29. The second application level entity 33 receives each acknowledgment signal and generates therefrom a frame acknowledgment signal which is fed back to the first application level entity 31 associated with the transmitter end 19. In the event that no acknowledgment signal is received in respect of an expected packet, i.e. the next packet in the sequence for that frame, then the second application level entity 33 feeds back a message identifying the erroneous frame Fi.

At the first application level entity 31, receipt of the message identifying the erroneous frame Fi is interpreted as a congestion condition on the basis that something in the network was unable to complete the data transfer. In response, the application level entity 31 generates a control message indicating, or from which can be derived, (i) the frame Fi requiring retransmission, (ii) the new, secondary, data source from which data is to be transmitted, and (iii) the reduced data rate at which data from the new data source is to be transmitted. Upon receipt of said control message, the transport level entity 31 ceases transmitting data from the current source, S1, discarding all existing data stored thereat and not yet transmitted, and commences transmitting data from the secondary data source, e.g. S1. Next, transmission from S1 commences with packets containing data representing the dropped frame Fi in its entirety. Subsequent frames of the sequence are transmitted from the same source until such time as congestion reduces, this being indicated by a different form of control message. At this time, frames are again transmitted from the previous data source.

In sending data at the lower average data rate during a congestion condition, congestion on the network should not be exacerbated. Since the number of bits required to encode the sequence is reduced, an larger number of frames should be successfully received at the receiver compared with sending the higher quality frames at the reduced data rate. Retransmission of the dropped frame allows the previous version of the frame to be discarded from the transmission level entity so as not to add to the congestion.

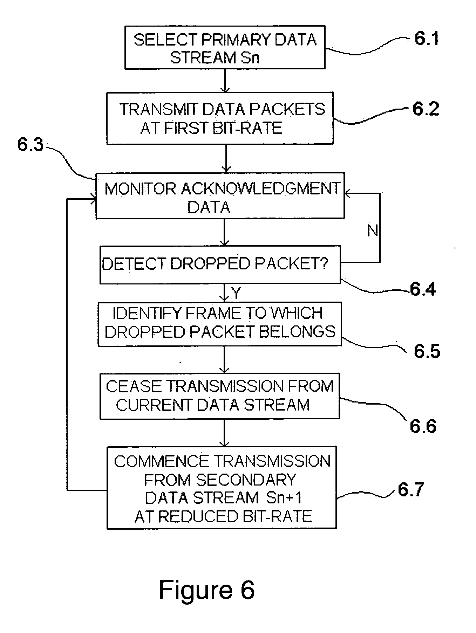

A summary of the above method is shown as steps 6.1 to 6.7 in the flow diagram of Figure 6.

The choice of data rate and lower quality data source can be indicated directly by the first application level entity 31, that is the entity may generate a empirically-derived congestion measure based on the number of successive frames not received in their entirety at the receiver 21. As more and more erroneous frames are detected, the entity may select the next data source in the sequence which may, for example, encode the frame sequence using an even lower resolution than the previous source.

Finally, the video streams should preferably be encoded in such a way as to permit switching between streams without the process itself introducing error. For example, in the MPEG 4/H.264 standard, this can be achieved using so-called 'switching pictures' which are encoded in such a way as to permit such stream switching in an efficient manner. Further details are described in "The SP- and SI- Frames Design for H.264/AVC" by Karczewicz and Kurceren, IEEE Transactions on Circuits and Systems for Video Technology, Volume 13, No. 7, July 2003.

Although the above-described embodiment describes plural data sources encoding source frames F1-Fn using a respective number of bits, the same principle of operation is provided by a single source of frames connected to an adaptive encoder which initially encodes incoming source frames into a first bit stream having a first average data rate and then, in response to receiving the control message indicating a dropped frame, switches encoding so as to retransmit the dropped frame, and one or more subsequent frames, in a second bit stream sent at a lower average data rate. Upon switching, the encoder encodes the source frames with fewer bits per frame, or fewer overall frames, e.g. by dropping non-reference frames.

## Claims

1. A method of transmitting data to a receiving device over a network, the data representing a sequence of video frames F₁.....Fₙ, the method comprising:
(a) providing first and second data sources, the second source encoding the frame sequence F₁.....Fₙ using fewer bits than the first source;
(b) transmitting data from the first source to the receiving device;
(c) during step (b) receiving control information indicating that data representing part of an intermediate video frame Fᵢ was not received at the receiving device; and
(d) in response to (c), ceasing transmission of data from the first source and transmitting data representing the complete intermediate video frame Fᵢ and one or more subsequent frames in the sequence from the second source.

2. A method according to claim 1, wherein the second source encodes each frame in the frame sequence F₁.....Fₙ using a fewer number of bits than the first source.

3. A method according to claim 2, wherein the second source encodes each frame at a lower resolution than the first source.

4. A method according to claim 1, wherein the second source encodes fewer frames of the frame sequence F₁.....Fₙ than the first source.

5. A method according to claim 4, wherein the first source encodes the frame sequence using reference frames and non-reference frames and wherein the second source drops one or more non-reference frames prior to transmission.

6. A method according to any preceding claim, wherein the control information is generated by means of monitoring data acknowledgment signals sent from the receiving device and identifying an intermediate frame Fᵢ for which at least one acknowledgment signal is not received in respect of its constituent data within a predetermined time period.

7. A method according to claim 6, wherein data is transmitted, and acknowledgment signals received, using the DCCP protocol.

8. A method according to claim 6 or claim 7, wherein the control information is generated using an application program arranged to identify said intermediate frame Fᵢ from the at least one acknowledgment signal not received within the predetermined time period.

9. A method according to claim 8, wherein the application program is provided at the receiving device.

10. A method according to claim 9, wherein the control information is transmitted using RTP or RTCP.

11. A method of transmitting data representing a sequence of video frames F₁.....Fₙ to a receiving device over a network, the method comprising:
(a) encoding the sequence of video frames into first and second data streams, the second data stream representing each frame, or a subset of frames, of the sequence with fewer bits than the first data stream;
(b) transmitting the first data stream to the receiving device at a first average data rate;
(c) during transmission of the first data stream, receiving control information from which can be identified an intermediate frame Fᵢ for which constituent data was not completely received at the receiving device; and
(d) in response to (c), ceasing transmission the first data stream and re-transmitting the complete intermediate video frame Fᵢ and subsequent frames using the second data stream, the second data stream being transmitted at a second average data rate which is lower than the first.

12. A method of generating control information for use in a video transmission system arranged to transmit a data stream representing a sequence of video frames F₁.....Fₙ over a network to a receiving device, the method comprising: monitoring data acknowledgment signals generated by the receiving device in response to receiving portions of said data stream within a predetermined time period, identifying therefrom an intermediate frame Fᵢ having at least one portion of its representative data not acknowledged, and transmitting a message including the identity of said intermediate frame Fᵢ to the transmission system.

13. A method according to claim 12, further comprising transmitting the message to the transmission system using RTP or RTCP.

14. A computer program stored on a computer readable medium and comprising a set of instructions for causing a computer to perform the steps defined in any one of the preceding claims.

15. A video transmission system for transmitting data to one or more receiving devices over a network, the data representing a sequence of video frames F₁.....Fₙ, the system comprising:
first and second data encoding means in which the second encoding means is arranged to encode the frame sequence using fewer bits than the first encoding means;
transmitting means arranged to transmit data from either the first or second encoding means to the receiving device; and
control means arranged to receive control information indicative that data representing part of an intermediate video frame Fᵢ was not received at the receiving device,
wherein the transmitting means is arranged, in response to receiving said control information at the control means, to cease transmission of data from the first encoder and to commence transmission of data representing the complete intermediate video frame Fᵢ, and one or more subsequent frames in the sequence, from the second encoder.

16. A system for generating control information for use in a video transmission system arranged to transmit a data stream representing a sequence of video frames F₁.....Fₙ over a network to a receiving device, the method comprising: means arranged to monitor data acknowledgment signals generated by a receiving device in response to receiving portions of said data stream within a predetermined time period; means arranged to identify an intermediate frame Fᵢ having at least one portion of its representative data not acknowledged; and means arranged to transmit a message including the identity of said intermediate frame Fᵢ to the transmission system.

17. A system according to claim 16 comprised within a television set top box (STB).

18. A method of transmitting data representing a sequence of video frames to a receiving device over a network, the method comprising:
(a) commencing transmission of the video frames as a first data stream transmitted at a first average data rate;
(b) during said transmission, receiving control information from which can be identified a frame Fᵢ for which at least part of its constituent data was not received at the receiving device; and
(c) in response to (b), ceasing transmission the first data stream and re-transmitting the complete video frame Fᵢ and at least one subsequent frame as a second data stream at a second average data rate which is lower than the first, the second data stream encoding the video frame Fᵢ and at least one subsequent frame using fewer bits per frame than frames already transmitted in the first data stream.
